# EUROPEAN PATENT APPLICATION

(11) **EP 2 469 883 A1**
(43) Date of publication of application: **27.06.2012**
(21) Application number: 11190114.6
(22) Date of filing: 22.11.2011
(51) Int. Cl.: H04N 21/485, H04N 21/431

(54) **Display apparatus and method for playing menu applied thereto**

(30) Priority: 27.12.2010 KR 20100135813
(71) Applicant: Samsung Electronics Co., Ltd., Suwon-si, Gyeonggi-do (KR)
(72) Inventor: Ryu, Young-jun, Gyeonggi-do (KR); Hwang, Byung-jin, Gyeonggi-do (KR); Lee, Dong-jin, Gyeonggi-do (KR); Ahn, Jae-hong, Gyeonggi-do (KR); Lee, Hye-jeong, Seoul (KR)
(74) Representative: Hewett, Jonathan Michael Richard

(57) **Abstract**

A display apparatus and a method for displaying a menu are provided. The display apparatus displays a content image on a first area of the entire screen area at a specific screen ratio and displays a menu comprising a plurality of pages on a second area corresponding to an area excluding the first area where the content image is displayed. Accordingly, the display apparatus may display a menu without blocking the content image or deteriorating quality of the content image.

## Description

The present invention relates to a display apparatus and a method for displaying a menu applied thereto, and more particularly, to a display apparatus which displays an image at various screen ratios and a method for displaying a menu applied thereto.

Recently, technologies for providing contents using various display apparatuses have been continuously developed. In addition, various types of images are being provided at various screen ratios.

For example, a movie is provided at a screen ratio of 21:9, a DVD image is provided at a screen ratio of 16:9, and a TV image is provided at a screen ratio of 4:3. Accordingly, a wide TV is provided to display such images at various screen ratios.

In general, a menu may be displayed on a screen in the form of a PIP image, being overlapped with a main image, or may be displayed in the remaining space after a main space is contracted.

If a menu is displayed in one of the above manners, however, a part of a main image is blocked, or the size of a main image is enlarged or contracted, deteriorating image quality. Accordingly, a method for display a menu without deteriorating image quality is required.

An aspect of the present invention relates to a display apparatus which displays a content image on a first area out of the entire screen area at a specific screen ratio and displays a menu comprising a plurality of pages in a second area which corresponds to the area excluding the first area, and a method for displaying a menu applied thereto.

A display apparatus, according to an exemplary embodiment, includes a display unit which displays a content image on a first area out of an entire screen area at a specific screen ratio and a control unit which controls to display a menu comprising a plurality of pages on a second area corresponding to an area excluding where the content image is displayed.

The specific screen ratio may be different from a screen ratio of the entire screen area.

The menu may include pages separated into a plurality of categories.

If manipulation of left direction and right direction button or manipulation of left direction flick or right direction flick touch is input, the control unit may convert a menu displayed on the second area into a page in a different category.

If manipulation of upper direction and lower direction button, or manipulation of upper flick or lower flick touch is input, the control unit may convert a menu displayed on the second area into a page in a same category.

The menu may include at least one of a search page, a news page, a shopping page, a content list page, and a SNS page.

If an external apparatus is connected, the control unit may add a page regarding the external apparatus to the menu.

If the external apparatus is connected, the control unit may control to display a menu page regarding the external apparatus on the second area.

If the external apparatus is disconnected, the control unit may remove a page regarding the external apparatus from the menu.

If an OSD menu display command is input, the control unit may add a page regarding the OSD menu to the menu.

A method for displaying a menu, according to an exemplary embodiment, includes displaying a content image on a first area out of an entire screen area at a specific screen ratio and displaying a menu comprising a plurality of pages on a second area corresponding to an area excluding where the content image is displayed.

The specific screen ratio may be different from a screen ratio of the entire screen area.

The menu may include pages separated into a plurality of categories.

The method may further include, if manipulation of left direction and right direction button or manipulation of left direction flick or right direction flick touch is input, converting a menu displayed on the second area into a page in a different category.

The method may further include, if manipulation of upper direction and lower direction button, or manipulation of upper flick or lower flick touch is input, converting a menu displayed on the second area into a page in a same category.

The menu may include at least one of a search page, a news page, a shopping page, a content list page, and a SNS page.

The method may further include, if an external apparatus is connected, adding a page regarding the external apparatus to the menu.

The method may further include, if the external apparatus is connected, displaying a menu page regarding the external apparatus on the second area.

The method may further include if the external apparatus is disconnected, removing a page regarding the external apparatus from the menu.

The method may further include, if an OSD menu display command is input, adding a page regarding the OSD menu to the menu.

The above and/or other aspects of the present disclosure will be more apparent by describing certain present disclosure with reference to the accompanying drawings, in which:
FIG. 1 is a block diagram illustrating configuration of a television in detail according to an exemplary embodiment;
FIG. 2 is a flowchart to explain a method for providing a menu according to an exemplary embodiment;
FIG. 3 is a view illustrating configuration of a screen according to an exemplary embodiment;
FIGS. 4A and 4B are views illustrating pages which constitute a menu according to an exemplary embodiment;
FIGS. 5A to 5G are views illustrating a process of selecting pages of a menu according to an exemplary embodiment;
FIGS. 6A to 6D are views illustrating a case where a USB memory is connected according to an exemplary embodiment; and
FIG. 7 is a view illustrating a case where an On Screen Display (OSD) display command is input according to an exemplary embodiment.

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of the exemplary embodiments. However, the exemplary embodiments can be practiced without those specifically defined matters. Also, well-known functions or constructions are not described in detail since they would obscure the application with unnecessary detail.

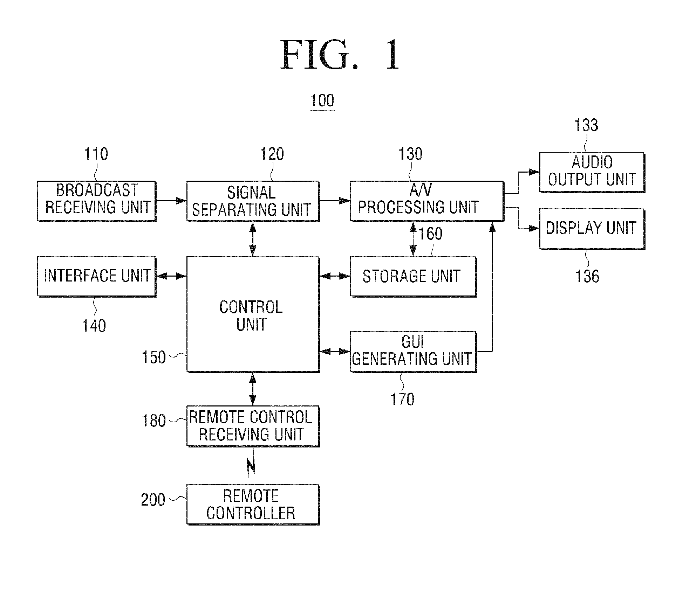

FIG. 1 is a block diagram illustrating configuration of a TV 100 in detail according to an exemplary embodiment. As illustrated in FIG. 1, the TV 100 comprises a broadcast receiving unit 110, a signal separating unit 120, an A/V processing unit 130, an audio output unit 133, a display unit 136, an interface unit 140, a control unit 150, a storage unit 160, a graphical user interface (GUI) generating unit 170, and a remote control receiving unit 180.

The broadcast receiving unit 110 receives broadcast from a broadcasting station or a satellite via wire or wirelessly and demodulates the received broadcast.

The signal separating unit 120 separates a broadcast signal into a video signal, an audio signal, and electronic program guide (EPG) information. In addition, the signal separating unit 120 transmits the video signal and the audio signal to the A/V processing unit 130 and the EPG information to the GUI generating unit 170.

The A/V processing unit 130 performs signal-processing such as video decoding, video scaling, and audio decoding on a video signal and an audio signal input from the signal separating unit 120 and the interface unit 140. In addition, the A/V processing unit 130 outputs a video signal to the display unit 136 and an audio signal to the audio output unit 133.

Meanwhile, when a video signal and an audio signal are stored in the storage unit 160 or transmitted to an external apparatus through the interface unit 140, the A/V processing unit 130 stores the video signal and the audio signal in the storage unit 160 or outputs the video signal and the audio signal to the interface unit 140 in a compressed form.

The audio output unit 133 outputs audio output from the A/V processing unit 130 through a speaker or an external apparatus connected through an external terminal (for example, an external speaker).

The display unit 136 displays an image output from the A/V processing unit 130 on a display. In addition, the display unit 136 may display menus generated by the GUI generating unit 170 on a screen. For example, the display unit 136 may display a menu comprising a plurality of pages on one portion of a screen.

Specifically, the display unit 136 includes a screen of which width is longer than its length. For example, the display unit 136 may have a screen ratio of 16:9 or 21:9.

The screen may be divided into a first area and a second area. As such, the display unit displays a content image on the first area out of the entire screen area at a specific screen ratio. In this case, the specific screen ratio of the content image is different from that of the full screen of the display unit 136. Accordingly, the display unit 136 displays the content image on one portion of the screen.

The display unit 136 displays a menu comprising a plurality of pages on the second area which corresponds to an area excluding the first area where the content image is displayed out of the entire screen.

Accordingly, the display unit 136 may display a menu in a separate area of the screen without blocking a content image or changing the size of the content image.

The interface unit 140 is connected to an external apparatus. For example, the interface unit 140 may be connected to an external image apparatus, a camera, or a universal serial bus (USB) memory. The interface unit 140 may include various A/V interfaces and USBs.

The storage unit 160 stores data regarding various contents. For example, the storage unit 160 may store various contents regarding a movie, a photo, and music.

The storage unit 160 records a broadcast program received from the broadcast receiving unit 110 and stores the content. In addition, the storage unit 160 may store not only a recording file but also a content copied by a user. The storage unit 160 may also output a stored content to the A/V processing unit 130. The storage unit 160 may be embodied as a hard disk or a non-volatile memory.

The GUI generating unit 170 generates a GUI to be displayed on the screen and adds the generated GUI to an image output from the A/V processing unit 130. In particular, the GUI generating unit 170 generates a GUI regarding a menu to be displayed on the second area of the screen.

The remote control receiving unit 180 receives a user's manipulation information from a remote controller 200. In particular, the remote control receiving unit 180 receives information regarding a user's touch manipulation from the remote controller 200 and transmits the received touch manipulation to the control unit 150. For example, the remote control receiving unit 180 receives information regarding flick touch manipulation in various directions from the remote controller 200. Herein, the flick touch manipulation represents manipulation in which a user touches a touch recognition surface, moves the surface in a specific direction, and removes the touch.

In addition, the remote control receiving unit 180 receives information regarding a user's button manipulation from the remote controller 200 and transmits the received information regarding button manipulation to the control unit 150. For example, the remote control receiving unit 180 receives manipulation information regarding various direction buttons from the remote controller 200.

The remote controller 200 receives a user's manipulation and transmits the received user's manipulation to the TV 100. In particular, the remote controller 200 includes a direction button or a touch sensing unit. If the remote controller 200 includes a direction button, the remote controller 200 receives manipulation of direction from a user through the direction button. If the remote controller 200 includes a touch sensing unit, the remote controller 200 receives manipulation of touch from a user through the touch sensing unit. The remote controller 200 transmits information regarding the sensed touch manipulation to the remote control receiving unit 180 of the TV 100.

The touch sensing unit of the remote controller 200 senses manipulation of touch of a user using a touch sensor. The touch sensing unit may be embodied as a touch screen of the remote controller 200 or as a touch pad provided on an outer surface of the remote controller 200 separately.

As such, the remote controller 200 may be embodied to include either one of a touch sensing unit or a button or both of them.

The control unit 150 identifies a user's command based on manipulation of a user transmitted from the remote controller 200 and controls overall operation of the TV 100 based on the identified user command.

Specifically, the control unit 150 controls to display a content image on the first area out of the entire screen area at a specific screen ratio. The control unit 150 also controls to display a menu comprising a plurality of pages on the second area which corresponds to an area excluding the area where the content image is displayed. In this case, the specific screen ratio is different from that of the full screen area. For example, if the full screen ratio is 21:9, the specific ratio of a content image may be 16:9 or 4:3. Alternatively, if the full screen ratio is 16:9, the specific ratio of a content image may be 4:3.

Herein, the menu represents a GUI which is displayed on a screen to provide a user with various services. In the exemplary embodiment, the menu represents an image displayed on the second area, but the menu is not limited the term, "menu." Thus, any image displayed on the second area may be the "menu."

The menu displayed on the second area consists of a plurality of pages, and each page may be categorized according to its characteristics. For example, the menu may include at least one of a full screen function page, a black function page, a dash board page, a channel information page, an advertisement page, a search page, a news page, a shopping page, a content list page, and a Social Networking Service (SNS) page.

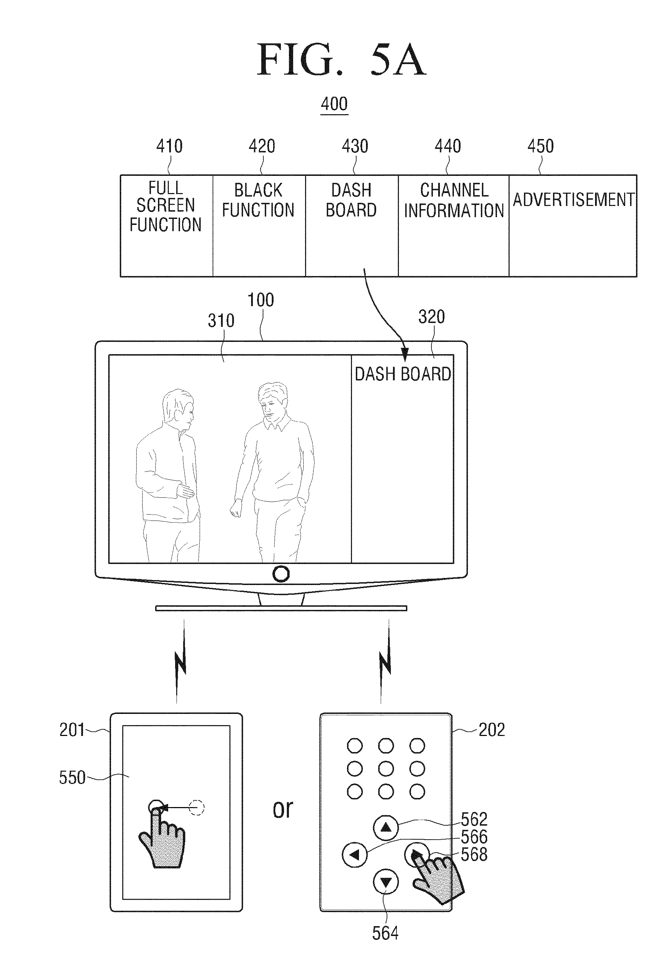

If direction button manipulation in a left direction or a right direction is input, or flick touch manipulation in a left direction or a right direction is input, the control unit 150 converts a menu displayed on the second area into a page of another category. Alternatively, if direction button manipulation in an upper direction or a lower direction, or flick touch manipulation in an upper direction or a lower direction is input, the control unit 150 converts a menu displayed on the second area into a page within the same category. Such a process of manipulating a menu will be explained in detail with reference to FIGS. 5A to 5G.

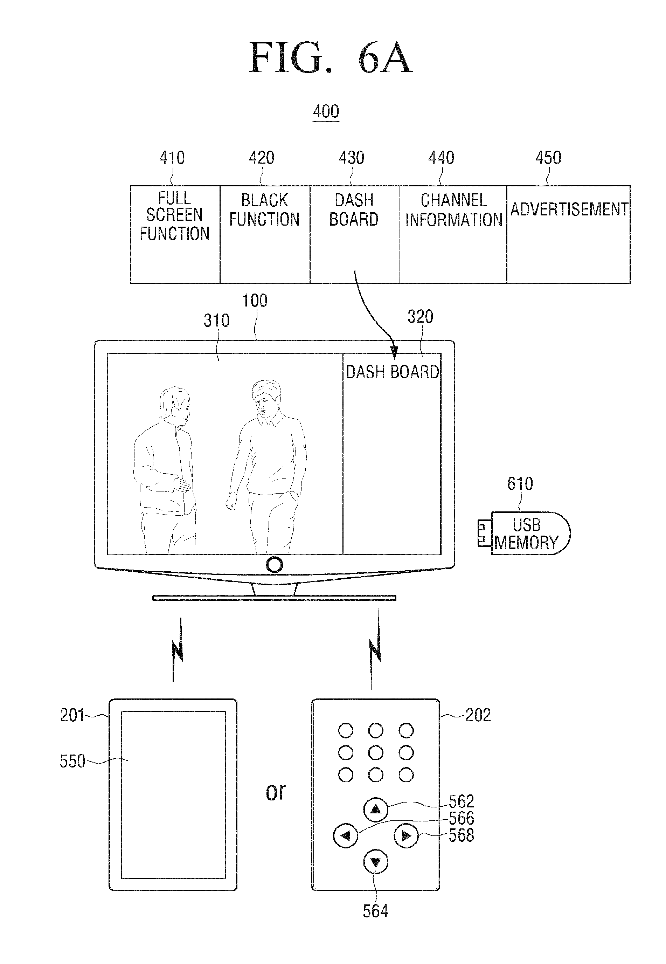

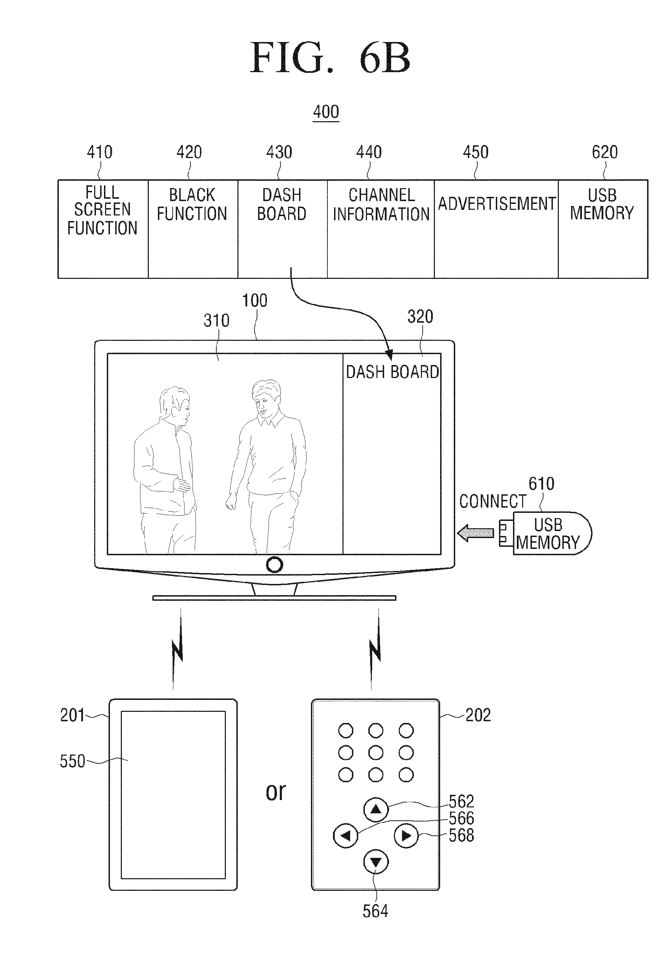

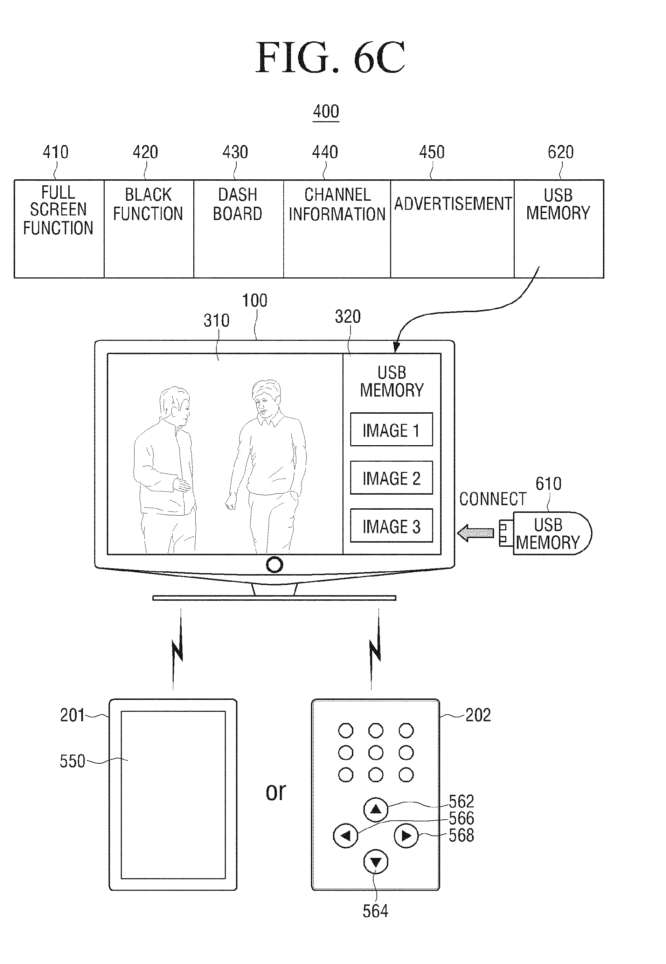

If an external apparatus is connected through the interface unit 140, the control unit 150 adds a page regarding the external apparatus to a menu. If an external apparatus is connected, the control unit 150 may also control to display a menu page regarding the external apparatus directly on the second area. If an external apparatus is disconnected, the control unit 150 removes a page regarding the external apparatus from the menu. This process will be explained in detail with reference to FIGS. 6A to 6D.

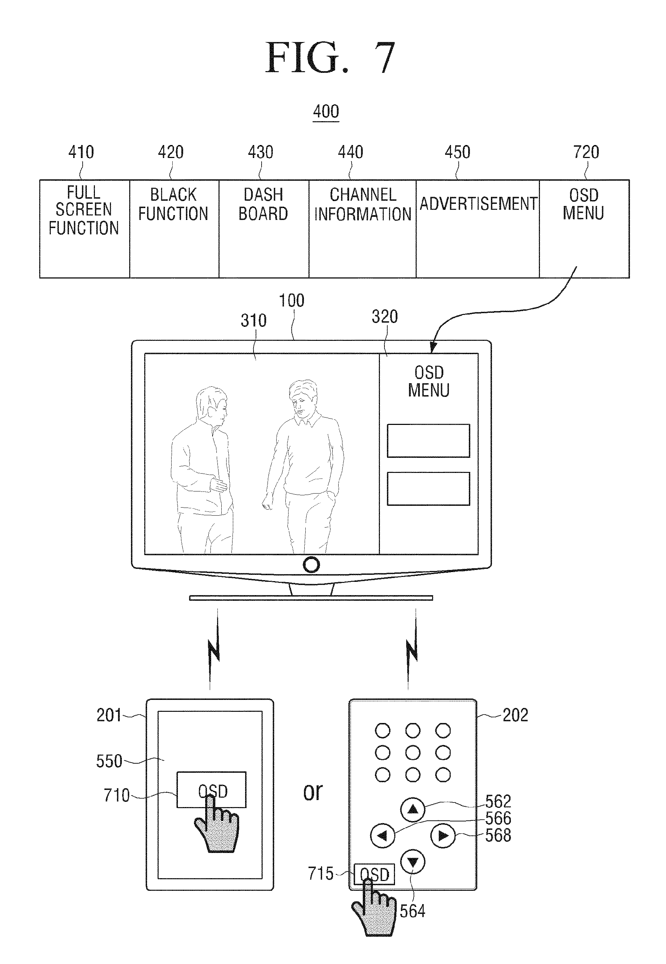

If an on screen display (OSD) menu display command is input, the control unit 150 may add a page regarding the OSD menu to a menu. This will be explained in detail reference to FIG. 7.

The TV 100 having the above configuration displays a menu on an area that remains after a content image is displayed. Accordingly, a user may use a menu screen which does not block a main image. In addition, the user may easily select a desired menu page using direction button manipulation or flick touch manipulation.

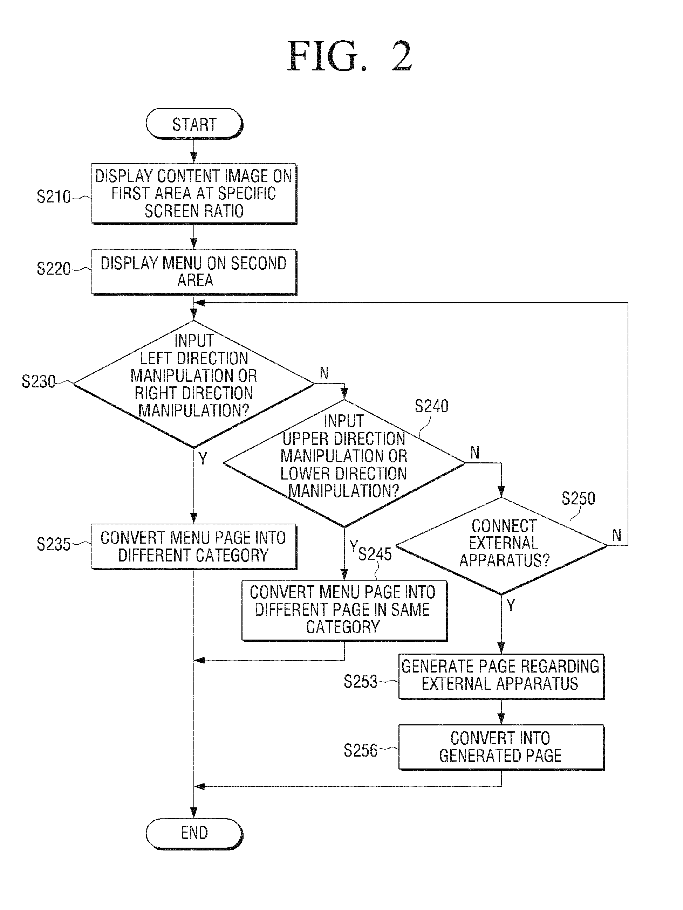

FIG. 2 is a flowchart to explain a method for providing a menu according to an exemplary embodiment.

First of all, the TV 100 displays a content image on the first area from among the entire screen area at a specific screen ratio (S210). Herein, the content image represents a main image a user desires to watch and includes a TV image, a DVD image, or other images desired by the user.

The TV 100 displays a menu comprising a plurality of pages on the second area corresponding to an area which excludes the first area where the content image is displayed (S220). Herein, the specific screen ratio is different from that of the full screen area. For example, if the full screen ratio is 21:9, the specific ratio of a content image may be 16:9 or 4:3. Alternatively, if the full screen ratio is 16:9, the specific ratio of a content image may be 4:3. That is, the ratio of the first area is smaller than the full screen ratio.

Herein, the menu represents a GUI which is displayed on a screen to provide a user with various services. In the exemplary embodiment, the menu represents an image displayed on the second area, but the menu is not limited the term, "menu." Thus, any image displayed on the second area may be the "menu."

The menu displayed on the second area consists of a plurality of pages, where one of the pages is displayed at a time, and each page may be categorized according to its characteristics. For example, the menu may include at least one of a full screen function page, a black function page, a dash board page, a channel information page, an advertisement page, a search page, a news page, a shopping page, a content list page, and a Social Networking Service (SNS) page.

If a direction button manipulation in a left direction or a right direction or a flick touch manipulation in a left direction or a right direction is input (S230-Y), the TV 100 converts a menu displayed on the second area from the current page of one category into a different page of another category (S235). Alternatively, if a direction button manipulation in an upper direction or a lower direction, or a flick touch manipulation in an upper direction or a lower direction is input (S240-Y), the TV 100 converts a menu displayed on the second area from the current page of one category into a different page within the same category (S245). Such a process of manipulating a menu will be explained in detail with reference to FIGS. 5A to 5G.

If an external apparatus is connected through the interface unit 140 (S250-Y), the TV 100 generates and adds a page regarding the external apparatus to the menu (S253). If an external apparatus is connected, the TV 100 may control to display a menu page regarding the external apparatus directly on the second area (S256). Herein, the page regarding an external apparatus may be a page for displaying a list of contents stored in the connected external apparatus. For example, if the external apparatus is a USB memory, the TV 100 may generate a page for displaying a list of contents stored in the USB memory.

If a manipulation in a left direction or a right direction is input while an external apparatus is connected, the TV 100 converts a menu from the current page of one category to a page of another category. Alternatively, if manipulation in an upper direction or a lower direction is input while an external apparatus is connected, the TV 100 converts a menu from the current page of one category to a different page within the same category. As such, the TV 100 selects a page regarding an external apparatus while the external apparatus is connected by manipulating a direction just like when the TV 100 selects other pages.

If an external apparatus is disconnected, the TV 100 removes a page regarding the external apparatus from the menu. This process will be explained in detail with reference to FIGS. 6A to 6D.

If an OSD menu display command is input, the TV 100 may add a page regarding the OSD menu to the menu. This will be explained in detail with reference to FIG. 7.

Through the above process, the TV 100 displays a menu on a second area that remains after a content image is displayed in a first area. Accordingly, a user may use a menu screen which does not block a main image of the content. In addition, the user may easily select a desired menu page using direction button manipulation or flick touch manipulation.

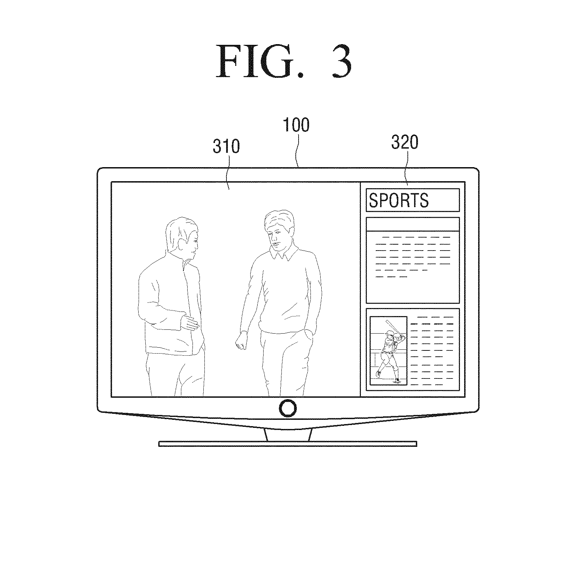

FIG. 3 is a view illustrating configuration of a screen according to an exemplary embodiment. As illustrated in FIG. 3, the TV 100 displays a content image on the first area 310 and a menu on the second area 320.

In this case, the content image is displayed on the first area 310 at an original ratio and the remaining area after the content image is displayed becomes the second area 320. Accordingly, a user may use a menu displayed on the second area 320 which does not distort or block the main content image.

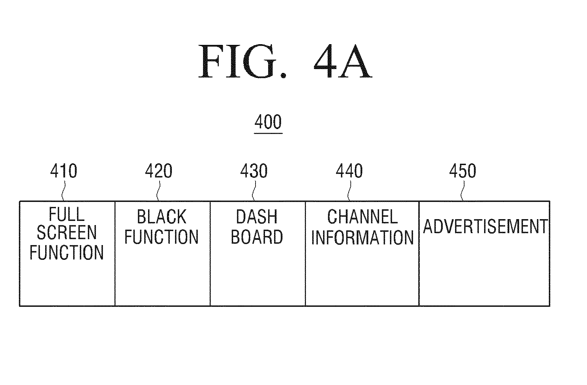

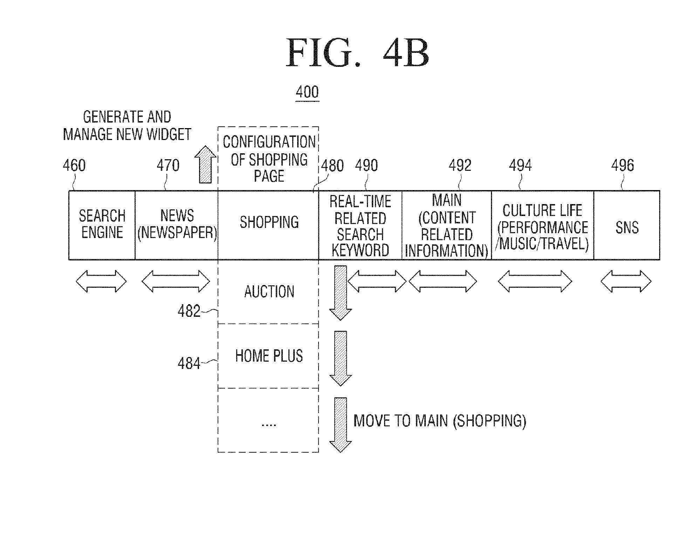

The menu displayed on the second area includes various pages which will be explained with reference to FIGS. 4A and 4B. FIGS. 4A and 4B are views illustrating pages which constitute a menu 400 according to an exemplary embodiment.

As illustrated in FIG. 4A, the menu 400 may include a full screen function page 410, a black function page 420, a dash board page 430, a channel information page 440, and an advertisement page 450.

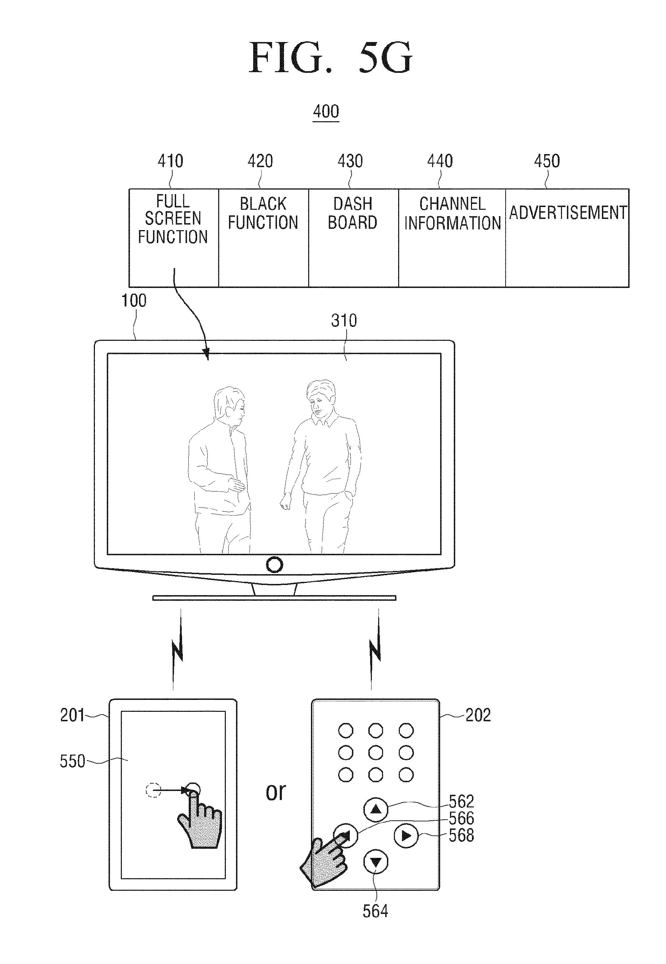

Herein, the full screen function page 410 represents a page for displaying a content image on the full screen. Therefore, if the full screen function page is selected, the TV 100 displays a content image as a full screen image, which is illustrated in FIG. 5G, instead of displaying a menu screen on the second area separately.

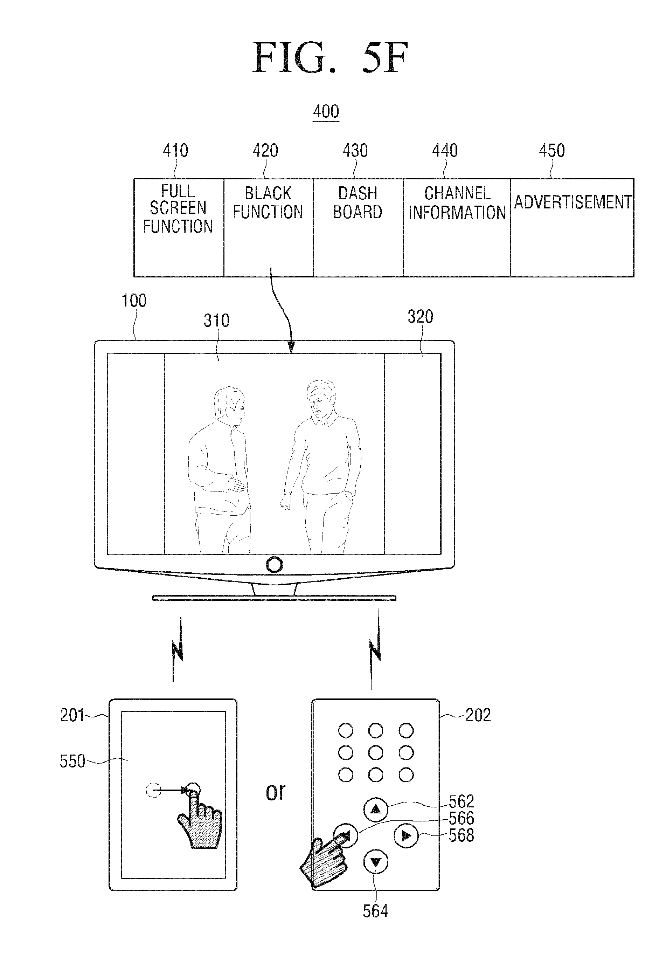

The black function page 420 represents a page for displaying only a content image and processing the second area to be displayed as a black image. Therefore, if the black function page is selected, the TV 100 displays only a content image on the first area and displays the second area as a black image without displaying a menu screen. In this case, the TV 100 may display the content image at the center of the screen, which is illustrated in FIG. 5F.

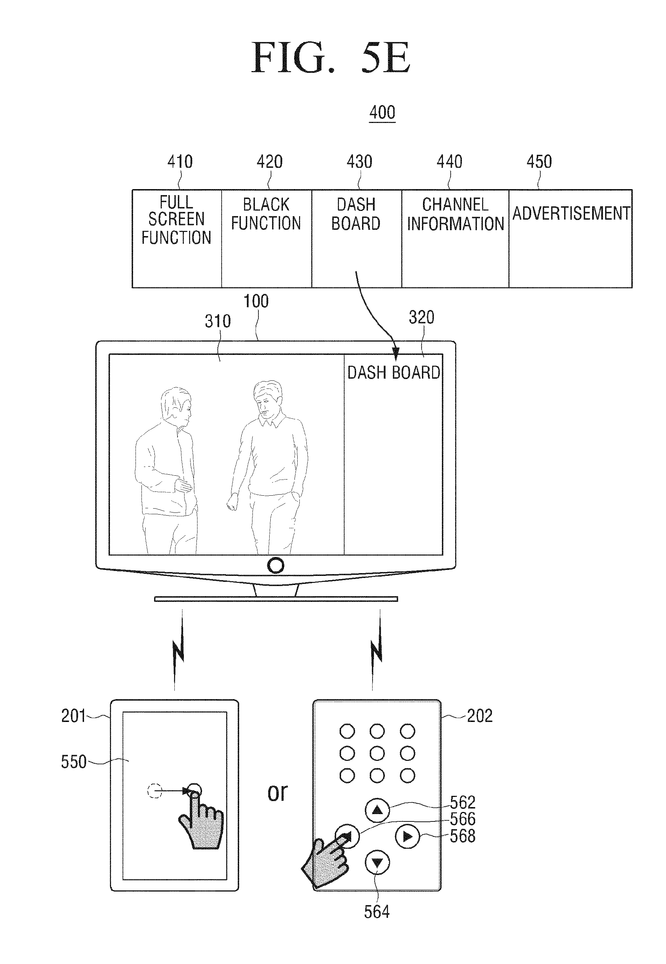

The dash board page 430 represents a page for providing a dash board function where information regarding a TV is displayed, and is illustrated in FIG. 5E. For example, the dash board page may display information such as a current channel and current information, or information set by a user.

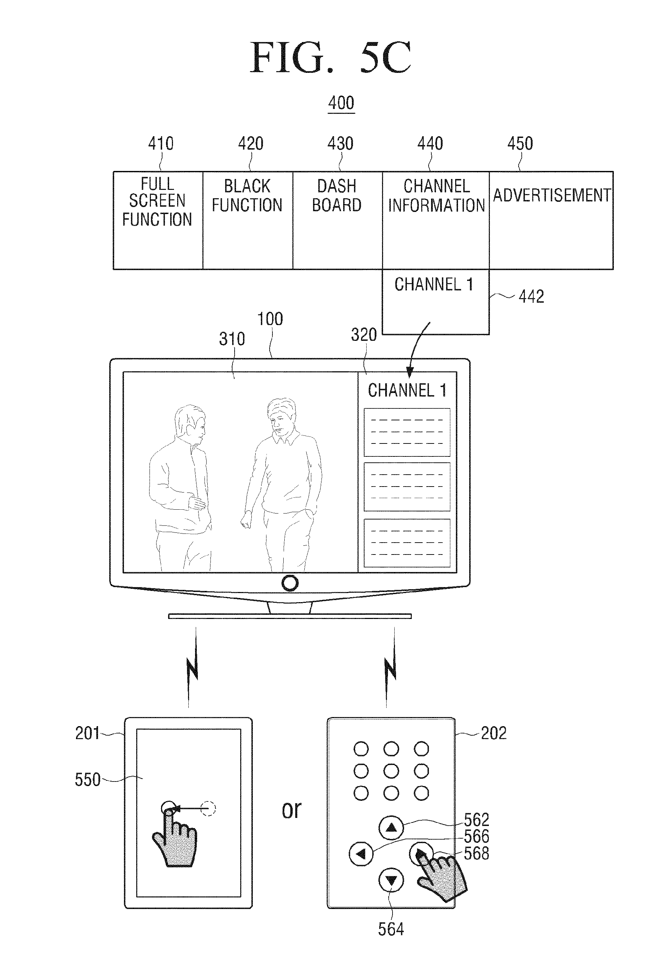

The channel information page 440 represents a page for displaying information regarding a currently selected channel and other channels, and is illustrated in FIG. 5C. For example, the channel information page may include a program guide for each channel. In addition, the channel information page includes a plurality of pages regarding each channel within the same category.

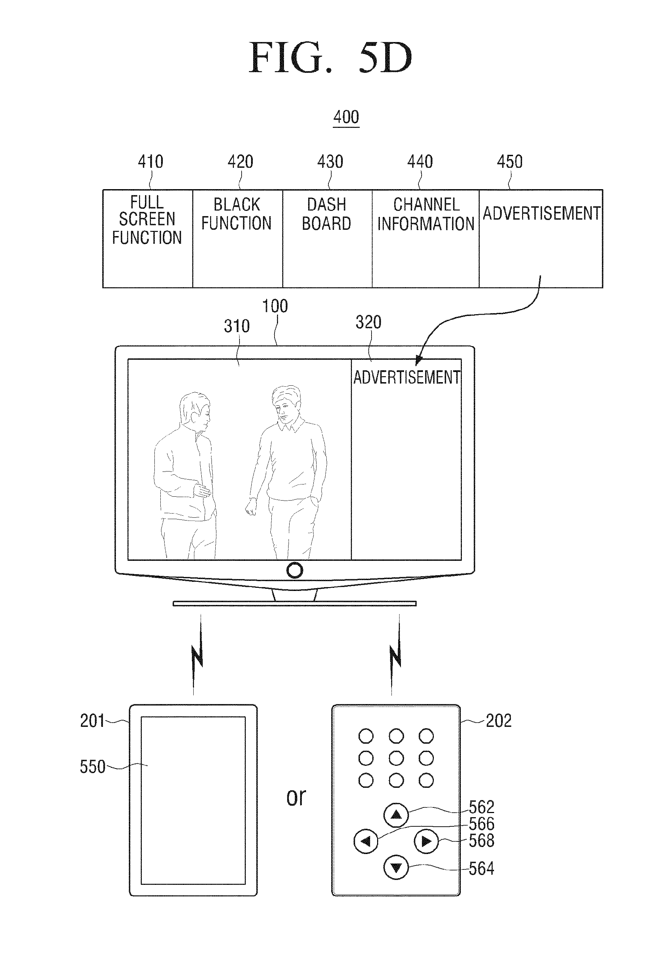

The advertisement page 450 represents a page for displaying advertisement information, and is illustrated in FIG. 5D.

In addition, as illustrated in FIG. 4B, the menu 400 may include at least one of a search engine page 460, a news page 470, a shopping page 480, a real-time related search keyword 490, a main (content list) page 492, and a SNS page 494.

Each page may consist of various pages in the same category. For example, as illustrated in FIG. 4B, the shopping page 480 may include an auction page 482, a home plus page 484, etc.

As such, the menu 400 consists of pages in various categories, and a user may select the menu easily using direction button manipulation or flick touch manipulation.

Hereinafter, a processing of selecting menu pages by a user will be explained with reference to FIGS. 5A to 5G. FIGS. 5A to 5G are views illustrating a process of selecting pages of a menu according to an exemplary embodiment.

FIG. 5A illustrates that a content image is displayed on the first area 310 of the TV 100 and the dash board page 430 from among pages of the menu 400 is displayed on the second area 320.

One of a touch screen-type remote controller 210 and a button-type remote controller 220 may be applied to the remote controller illustrated in FIG. 5A.

The touch screen-type remote controller 210 includes a touch screen 550, and the button-type remote controller 202 includes direction buttons 562, 564, 566, 568.

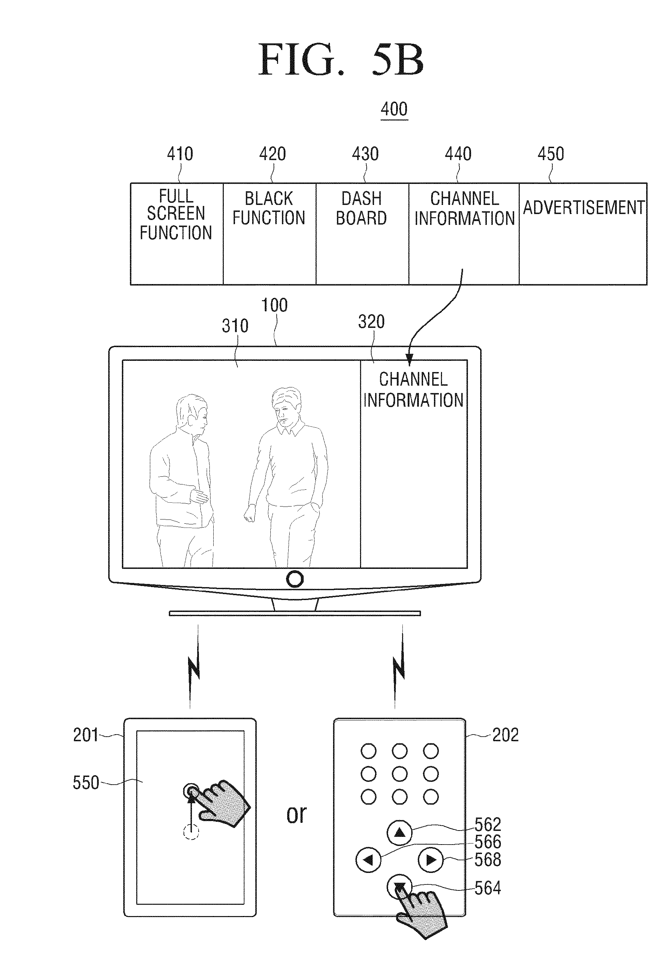

In this state, if a user inputs a flick manipulation in the left direction or a manipulation of the right direction button 568 as illustrated in FIG. 5A, the page of the menu 400 displayed on the second area 320 is converted into the channel information page 440 as illustrated in FIG. 5B.

That is, if manipulation in the left direction and in the right direction is input, it can be seen that the TV 100 converts a menu page into a page in a different category.

In this state, if a user inputs a flick manipulation in the upper direction or a manipulation of the lower direction button 564 in the lower direction as illustrated in FIG. 5B, the page of the menu 400 displayed on the second area 320 is converted into the channel information page 442 regarding channel 1 as illustrated in FIG. 5C.

That is, if manipulation in the upper direction or in the lower direction is input, it can be seen that the TV 100 converts a menu page into a different page in the same category.

In this state, if a user inputs a flick manipulation in the left direction or a manipulation of the right direction button 568 as illustrated in FIG. 5C, the page of the menu 400 displayed on the second area 320 is converted into an advertisement page 450 as illustrated in FIG. 5D.

Going back to the state where the dash board page 430 is displayed as illustrated in FIG. 5E, if a user inputs a flick manipulation in the right direction or a manipulation of the left direction button 566 as illustrated in FIG. 5E, the black function page 420 is selected in the menu 400 as illustrated in FIG. 5F. Accordingly, as illustrated in FIG. 5F, the TV 100 displays only a content image on the screen and displays the remaining area to be a black screen, which is referred to as a black function.

In this state, if a user inputs a flick manipulation in the right direction or a manipulation of the left direction button 566 as illustrated in FIG. 5F, the full screen function page 410 is selected in the menu 400 as illustrated in FIG. 5G. Accordingly, as illustrated in FIG. 5G, the TV 100 displays only a content image on the full screen, which is referred to as a full screen function.

As such, a user may select a desired page easily by inputting button manipulation or flick manipulation to a remote controller.

FIGS. 6A to 6D are views illustrating a case where a USB memory 610 is connected according to an exemplary embodiment.

As illustrated in FIGS. 6A to 6C, if the USB memory 610 is connected to the TV 100, the TV 100 newly generates a page 620 regarding the USB memory in the menu 400 and displays the page 620 regarding the USB memory 610 directly on the second area 320 of the screen.

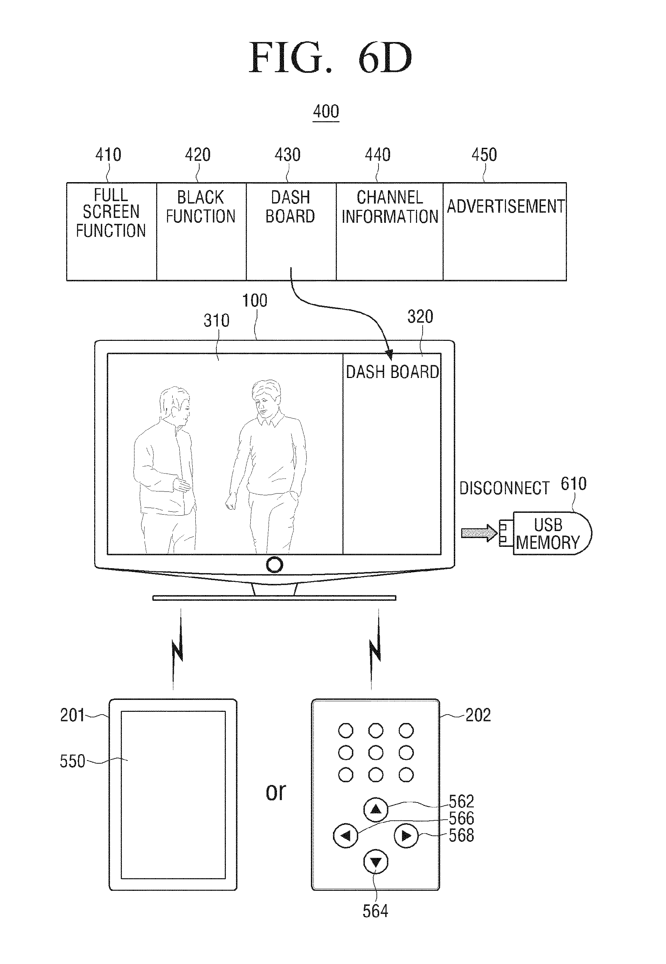

If the USB memory 610 is disconnected, as illustrated in FIG. 6D, the TV 100 removes the page 620 regarding the USB memory from the menu 400. Subsequently, the TV 100 displays the dash board page 430 on the second area 320 again.

As such, if an external apparatus such as the USB memory 610 is connected, the TV 100 generates a page regarding the external apparatus in the menu and provides the generated page on the display automatically.

FIG. 7 is a view illustrating a case where an On Screen Display (OSD) display command is input according to an exemplary embodiment. As illustrated in FIG. 7, if an OSD display icon 710 or an OSD display button 715 is selected by a user, the TV 100 generates a page 720 regarding the OSD menu in the menu 400.

Subsequently, the TV 100 displays the page 720 regarding the OSD menu on the second area 320.

As such, the TV 100 may display an OSD menu on the second area. Accordingly, a user may use the OSD menu easily while the OSD menu does not block a main image.

In the above exemplary embodiment, a display apparatus is a TV, but this is only an example. Any apparatus having a screen ratio which is capable of displaying the first area and the second area may be a display apparatus. For example, the technical feature of the present invention may be applied to a display apparatus such as a mobile phone, a portable media player (PMP), and an MP3 player.

According to the various exemplary embodiments, a display apparatus in which a content image is displayed on the first area out of the entire screen area at a specific ratio and a menu comprising a plurality of pages is displayed on the second area which is an area excluding the area where the content image is displayed and a method for displaying a menu applying thereto are provided. Thus, the menu may be displayed without blocking the content image or deteriorating quality of the content image.

Although a few exemplary embodiments of the present invention have been shown and described, it would be appreciated by those skilled in the art that changes may be made to these exemplary embodiments without departing from the invention, the scope of which is defined in the claims.

## Claims

1. A display apparatus, comprising:
a display unit which displays a content image on a first area out of an entire screen area at a specific screen ratio; and
a control unit which controls the display unit to display a menu comprising a plurality of pages on a second area corresponding to an area excluding where the content image is displayed.

2. The apparatus as claimed in claim 1, wherein the specific screen ratio is different from a screen ratio of the entire screen area.

3. The apparatus as claimed in claim 1 or claim 2, wherein the menu includes pages divided into a plurality of categories.

4. The apparatus as claimed in claim 3, wherein the control unit, if manipulation of left direction and right direction button or manipulation of left direction flick or right direction flick touch is input, converts a menu displayed on the second area into a page in a different category.

5. The apparatus as claimed in claim 3, wherein the control unit, if manipulation of upper direction and lower direction button, or manipulation of upper flick or lower flick touch is input, converts a menu displayed on the second area into a page in a same category.

6. The apparatus as claimed in one of claim 1 to claim 5, wherein the menu includes at least one of a search page, a news page, a shopping page, a content list page, and a SNS page.

7. The apparatus as claimed in one of claim 1 to claim 6, wherein the control unit, if an external apparatus is connected, adds a page regarding the external apparatus to the menu.

8. The apparatus as claimed in claim 7, wherein the control unit, if the external apparatus is connected, controls to display a menu page regarding the external apparatus on the second area.

9. The apparatus as claimed in claim 7, wherein the control unit, if the external apparatus is disconnected, removes a page regarding the external apparatus from the menu.

10. The apparatus as claimed in one claim 1 to claim 9, wherein the control unit, if an OSD menu display command is input, adds a page regarding the OSD menu to the menu.

11. A method for displaying a menu, the method comprising:
displaying a content image on a first area out of an entire screen area at a specific screen ratio; and
displaying a menu comprising a plurality of pages on a second area corresponding to an area excluding where the content image is displayed.

12. The method as claimed in claim 11, wherein the specific screen ratio is different from a screen ratio of the entire screen area.

13. The method as claimed in claim 11 or claim 12, wherein the menu includes pages divided into a plurality of categories.

14. The method as claimed in claim 13, further comprising:
if manipulation of left direction and right direction button or manipulation of left direction flick or right direction flick touch is input, converting a menu displayed on the second area into a page in a different category.

15. The method as claimed in claim 13, further comprising:
if manipulation of upper direction and lower direction button, or manipulation of upper flick or lower flick touch is input, converting a menu displayed on the second area into a page in a same category.
